# EUROPEAN PATENT SPECIFICATION

(11) **EP 1 216 467 B1**
(45) Date of publication and mention of the grant of the patent: **07.01.2004**
(21) Application number: 00908386.6
(22) Date of filing: 27.01.2000
(51) Int. Cl.: G09F 13/04, B32B 27/00

(54) **MULTILAYER OPTICALLY UNIFORM FILMS**
OPTISCH EINHEITLICHER MEHRSCHICHTFILM
FILMS MULTICOUCHES OPTIQUEMENT UNIFORMES

(30) Priority: 01.10.1999 US 411544
(43) Date of publication of application: 26.06.2002
(73) Proprietor: 3M Innovative Properties Company, St. Paul, MN 55133-3427 (US)
(72) Inventor: EMSLANDER, Jeffrey, O., Saint Paul, MN 55133-3427 (US)
(74) Representative: VOSSIUS & PARTNER
(86) International application number: PCT/US2000/001989
(87) International publication number: WO 2001/026081

(56) References cited:
- EP-A- 0 810 086
- US-A- 5 591 530
- PATENT ABSTRACTS OF JAPAN vol. 1995, no. 05, 30 June 1995 (1995-06-30) -& JP 07 036396 A (HIRAOKA & CO LTD), 7 February 1995 (1995-02-07)

## Description

The present invention relates to optically uniform films, in particular, translucent multilayer films.

Films, preferably translucent films, are used for a wide variety of backlit signage applications. Typical uses include substrates for advertising such as kiosks commonly found in shopping malls, and colored films that are used as decorations for sign-faces. Optical uniformity is essential in producing translucent films because any variation in color is easily detected by the eye when light is transmitted through the film resulting in a blotchy, undesired appearance.

Advertising and promotional displays often include graphic images appearing on structural surfaces such as truck sides and awnings, or free-hanging as banners. To prepare the display, an image may be formed on an adhesive-backed image receptor medium, sometimes referred to as a graphic marking film, which is then adhered to the desired substrate. Alternatively, the image may be formed first on a temporary carrier, or image transfer medium, and transferred to the image receptor medium. The image receptor medium usually includes a base material with an additional receptor layer overlying it. The base material is typically a plasticized vinyl film, although paper may also be used.

Although the graphic display may be intended for a long term installation of 5 years or more, it is often a relatively short term (1 week to 1 year) outdoor installation. In the case of a short term display, the image receptor medium is desirably a low cost, weather resistant, durable graphic marking film having good printability and adhesion of inks and/or toners that is easily applied to and removed from a surface.

Images can be created by one of several known methods; such as electrography, screen printing, inkjet printing, and thermal mass transfer. Electrography involves passing a substrate, normally a dielectric material, through an electrographic printing device, one type of which is an electrostatic printer. In the printer, the substrate is addressed with static electric charges (e.g., as from a stylus) to form a latent image which is then developed with suitable toners. This technique is especially suitable for producing large scale images for use on posters and signs.

At the conclusion of the electrographic process where the toned image has been developed on the dielectric substrate, the printed substrate can be enclosed between two layers of clear vinyl plastic film and used directly in an application, such as an outdoor sign.

To produce large signs that are suitable for outdoor display, the toned image electrographically deposited on a dielectric substrate can be transferred to a more weather resistant image receptor medium. The dielectric substrate is then known as an image transfer medium. This technique is discussed in U.S. Patent No. 5,262,259 (Chou et al.). Image transfer may also be practiced with images created by a variety of other known techniques such as knife coating, roll coating, rotogravure coating, screen printing, and the like.

Transfer of the image from an image transfer medium to an image receptor medium typically requires the application of pressure and heat through, for example, lamination in a heated pressure roll system (hot roll lamination). This type of image transfer system is described in U.S. Patent No. 5,114,520 (Wang et al.). Though the hot roll lamination system is effective, the transfer rates have been considered slow (generally between 0.5 and 1.0 m/min.).

Images may also be created directly on a weatherable, durable image receptor medium using such techniques as screen printing and inkjet printing.

The inkjet printing process is now well known. Recently, wide format printers have become commercially available, making feasible the printing of large format articles such as posters, signs and banners. Inkjet printers are relatively inexpensive as compared with many other hardcopy output devices, such as electrostatic printers. Generally, inkjet inks are wholly or partially water-based. Inkjet images may be printed on plain paper or on a suitable image receptor medium that has been treated or coated to improve its inkjet receptor properties. For example, it is known to apply an additional layer of material to an image receptor medium to improve the receptivity to and adhesion of inkjet inks. The materials commonly found in such an inkjet reception layer do not generally adhere well to many image receptor media base films, such as vinyl or polyester.

The present invention provides a backlit graphic display article comprising as part of the face of the article a multilayer film comprising at least two layers. At least two of the layers are pigmented to matching color such that the multilayer film has a percent light transmission of about 5% to about 85% and does not show visible discontinuities when evaluated by the unaided eye under Backlight Conditions.
Figure 1 is a schematic cross-sectional view illustrating an embodiment of a multilayer film of this invention, including an image receptor layer and a pigment-containing layer.
Figure 2 is a schematic cross-sectional view illustrating a further embodiment of a multilayer film of this invention, including an image receptor layer, a pigment-containing layer, an optional prime layer, and an optional adhesive layer.
Figure 3 is a schematic diagram of a system useful to manufacture an optically uniform film in accordance with the invention.
Figures 4a and 4b are schematics of equipment that can be utilized in a method for forming a multilayer film in accordance with the invention.

It has been found that variations in color are especially problematic in translucent films because the eye can easily distinguish minor color variations when light is transmitted through the film, resulting in a blotchy appearance to the unaided eye. Optical uniformity is less problematic in opaque films because less light is transmitted through the film, thus minimizing minor color variations to the unaided eye.

Advantageously, it was surprisingly found that a multilayer film appears to randomize the minor color variations in each pigment-containing layer resulting in a more optically uniform total film. For instance, an optically uniform multilayer film could result in lower production costs, particularly in coextrusion techniques, for films used in backlit signage applications as well as other applications.

For purposes of the present invention, a "backlit graphic display article" is a display medium or signage construction having a face, wherein the visibilility of the face is enhanced by light transmitted through the face. For purposes of the present invention, layers are considered to have a matching color if the differences between the colors of the layer are small enough that upon disposing one layer generally over the other layer, the color of the two layers will average to hide discontinuities in any single layer, rather than enhance or accentuate the discontinuities in any one layer. Thus, it is contemplated that perfect color matching may be difficult if not impossible to achieve in different layers, particularly if the layers comprise different materials (such as in the films of different polymer composition) or are of different thicknesses. Also, it is contemplated that different pigments or colorants may be used in different layers for any of a number of reasons; such as economy or special effects only apparent in colorants contained in the outermost layer (such as pearlescence).

For purposes of the present invention, the evaluation of whether visible discontinuities are present is performed by the unaided eye under Backlight Conditions. This means that a film is observed under backlighted conditions to identify any visible discontinuities using a light box having a viewing area of 24" by 24" (about 60 cm by 60 cm) and that utilizes 4 fluorescent bulbs, 17 Watts each. One suitable light box is commercially available under the trade designation LUMINAIRE ULTRA II, from Clearr Corp., Minnetonka, MN. The observation is performed with the unaided human eye having normal or corrected to normal vision at a distance of 2 feet from the backlit film. By "visible discontinuities" is meant patterns, strata or color differences in different regions of the film that would unduly detract from the uniform appearance of the film.

It is further contemplated that layers having matching color need not be immediately adjacent to each other to provide the benefit of uniform color rendition of the backlit graphic display article. Thus, for example, a green face may be provided by a four layer material comprising, in order, a blue layer, a yellow layer, a blue layer and yet another yellow layer.

Preferred backlit display graphics articles include signs and kioks, such as those currently prevalent in modem shopping malls, and the like.

A preferred aspect of the present invention provides a multilayer film that includes a pigment-containing layer; an image receptor layer; and at least one optional layer selected from the group of an adhesive prime layer, an adhesive layer, a penetrant layer, an inkjet receptor layer, and a protective overlaminate layer, wherein at least two of the layers are pigmented such that the multilayer film has a percent light transmission of about 5% to about 85% and does not show visible discontinuities when evaluated by the unaided eye under Backlight Conditions.

Preferably, a multilayer film of the present invention passes the Comparative Uniformity Test (herein "CUT"). A multilayer film is deemed to pass the CUT if the standard deviation of an average of ten different light transmission measurements at different points on the major surface of the multilayer film is less than 75% of the standard deviation of an average of ten different light transmission measurements of a single layer comparative film. A single layer comparative film is a film made from the same materials, blended under the same conditions, extruded using the same equipment varying only the take-away speed to achieve the designed thickness, and having the same total thickness as the multi layered film to be evaluated. More preferably, the standard deviation of the multilayered film is less than 50% of the single layer comparative film under the CUT evaluation, and most preferably the standard deviation of the multilayered film is less than 35% of the single layer comparative film under the CUT evaluation. This evaluation is performed using a Macbeth model #TR927 reflection densitometer (Macbeth, Newburgh, NY) or similar instrument of like sensitivity.

For example, a layer formulation consists of 100 parts Chevron 129.24 medium density polyethylene (Chevron Chemical Company LLC, Houston, Texas) and 2 parts Standridge #11937 White titanium dioxide color concentrate (Standridge Color Corporation, Social Circle, Georgia). These materials are dry blended together and extruded through a 1.9 cm Brabender lab extruder (C.W. Brabender Instruments Inc., South Hackensack, NJ) and cast onto a 50 µm by 15.24 cm polyester carrier liner and solidified by passing through a chilled three roll stack. A screw having multiple mixing pins was used to provide good mixing of these materials. Three layers are produced having a thickness of 88 µm, 43 µm, and 35 µm.

Two layers having a thickness of 43 µm and three layers having a thickness of 35 µm are laminated by passing through a Pro-Tech model #9540 laminator heated to 93 °C at 0.3 m/min under a pressure of 0.44 MPa to produce a multilayer film having two pigmented layers and three pigmented layers, respectively. Thus, the multilayer films and the single layer film all have approximately the same thickness. These three film types are tested for light transmission using a Macbeth model #TR927 reflection densitometer (Macbeth, Newburgh, NY). Ten readings of light transmission are randomly taken from each film type and the resulting average light transmission and standard deviation from each film type is then calculated.

In accordance with the present invention, a multilayer film preferably can include from about 2 layers to about 35 layers.

In one embodiment, at least one of the pigment-containing layer and the image receptor layer includes two or more sublayers.

Preferably, the pigment-containing layer and the image receptor layer each comprise a polymer selected from the group consisting of polyester, polyamide, polyimide, polyurethane, polyethylene acrylic acid, polyvinyl chloride, polyethylene methacrylic acid, thermoplastic rubbers, polypropylene oxides, polystyrenes, polystyrene-polydiene block copolymers, ionic thermoplastic elastomers, polyethers, polyesteramides, polyetheresteramides, siloxanes, ethylene vinyl acetate, polymethyl methacrylate (PMMA), polyvinyl dichloride (PVDC), acetate copolymers, polybutenes, fluorine-containing elastomers, silicone rubbers, polycaprolactones, and elastomeric block copolymers, and blends and combinations thereof. More preferably, the pigment-containing layer and the image receptor layer each include a different polymer.

Another aspect of the present invention provides a method of making a multilayer film that includes providing a first pigmented layer; providing a second pigmented layer; and joining the first pigmented layer and the second pigmented layer, wherein the multilayer film has a percent light transmission of about 5% to about 85% and does not show visible discontinuities when evaluated by the unaided eye under Backlight Conditions.

In one embodiment, joining the first pigmented layer and the second pigmented layer preferably includes laminating the first pigmented layer and the second pigmented layer.

In another embodiment, providing the first pigmented layer includes providing a first molten stream comprising a polymer and a pigment and joining the first pigmented layer by extruding the first molten stream on the second pigmented layer. Preferably, providing the second pigmented layer includes providing a second molten stream comprising a polymer and a pigment and joining the first pigmented layer and the second pigmented layer by coextruding the first molten stream with the second molten stream. The use of a coextrusion process to produce translucent films having improved optical uniformity could allow films to be produced at lower costs with increased flexibility in product design. The use of olefin based materials instead of cast vinyl to produce translucent films could be desirable because the use of PVC is becoming less desirable due to the presence of chlorine. Further, because of their ease in processing, olefin resins also allow other materials to be readily combined into the film structure through coextrusion to produce functional layers imparting properties to the film such as graffiti resistance, image receptivity, abrasion resistance, adhesive anchorage, flame retardance, and the like. These functional layers can be pigmented if desired to increase the optical uniformity of the film.

As used herein, "film" refers to a substantially continuous sheet of a composition. Film is to be distinguished from layer in that a "layer" can be a stratum of the film so that a film may include one, two or more layers, i.e., contains multilayers.

A multilayer film in accordance with the present invention preferably has a percent light transmission in a range of about 5% to about 85%, preferably about 15% to about 75%, more preferably about 20% to about 50%. Percent light transmission is determined using a Macbeth model #TR927 reflection densitometer or similar instrument of like sensitivity. A preferred embodiment of the present invention is a multilayer film that is not optically clear. For purposes of the present invention, a film is not optically clear if it sufficiently diffuses light under backlight conditions as described above such that the observer cannot distinguish the light bulbs contained in the light box.

As used herein, "coextrusion" is to be distinguished from other manufacturing techniques for joining more than one layer, such as lamination, coating, extrusion coating, or mechanical means (e.g., clamps, clips, etc.) used in assembling multilayer films. For example, in lamination, various formed layers of the film are brought together under temperature and/or pressure (e.g., using heated laminating rollers or a heated press) to adhere adjacent layers to each other. In extrusion coating, a first layer is extruded onto either a cast web, a formed film, and subsequent layers are sequentially coated onto the previously provided layers. In any of these manufacturing techniques, assembly of the layers typically occurs after at least one of the layers is formed prior to the addition of any additional layer(s).

Preferably, a multilayer film has a thickness of about 1 mil (25 µm) to about 12 mils (300 µm), more preferably about 1.5 mils (37 µm) to about 6 mils (150 µm), and most preferably about 2 mils (50 µm) to about 4 mils (100 µm). Of course, one skilled in the art will readily appreciate that the thickness of the multilayer film will vary depending upon the end application of the multilayer film, manufacturing process employed, and the handleability required of the multilayer film. Further, a multilayer film includes at least two pigmented layers and can include as many layers as is practical in the manufacturing process used to make the film. One with ordinary skill in the art will readily appreciate that as the number of layers increases, the thickness of each layer becomes thinner for a given total thickness of the multilayer film. Thus, a multilayer film of the present invention preferably includes less than about 35 layers, wherein at least two layers are pigment-containing, and more preferably about 2 to about 12 layers, so long as at least two of the layers are pigment-containing. Although all layers of the multilayer film can be pigment-containing, a multilayer film of the present invention preferably includes from about 2 to about 12, more preferably about 2 to about 10, and even more preferably about 2 to about 7 pigment-containing layers.

### Image Receptor Layer

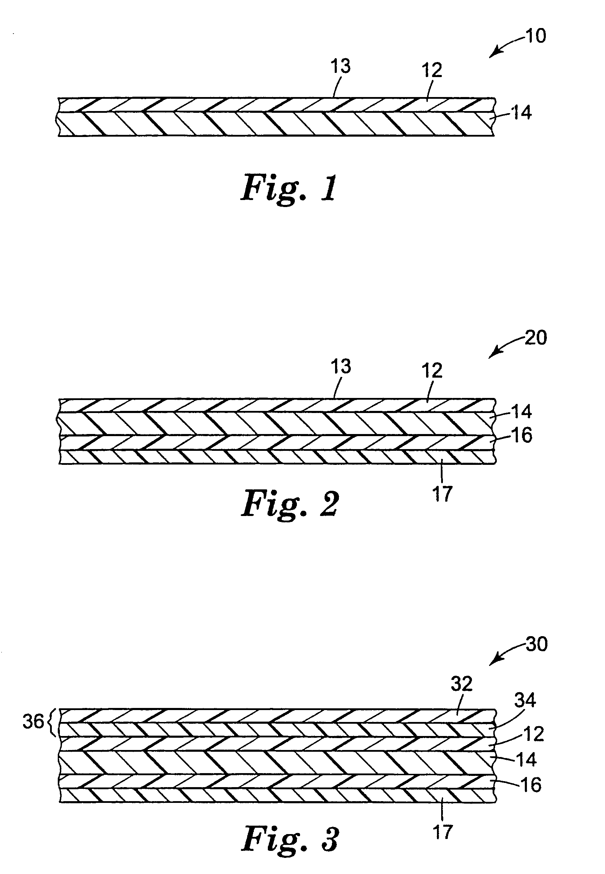

A multilayer film in accordance with the present invention preferably includes an image receptor layer. Referring to Figure 1, a multilayer film 10 includes an image reception layer 12, including at least one polymer and a pigment. Typically, the polymer is selected based on the desired type of imaging for which it is to be used, such as flexographic or digital imaging. In accordance with the present invention, an image receptor layer can include a thermoplastic material, such as polyester, polyamide, polyimide, polyurethane, polyethylene acrylic acid, polyvinyl chloride, polyethylene methacrylic acid, thermoplastic rubbers (e.g., nitriles), polypropylene oxides, polystyrenes, polystyrene-polydiene block copolymers, ionic thermoplastic elastomers, polyethers, polyesteramides, polyetheresteramides, siloxanes, ethylene vinyl acetate, PMMA, PVDC, acetate copolymers, polybutenes, fluorine-containing elastomers, silicone rubbers, polycaprolactones, and elastomeric block copolymers, and blends of the aforementioned. Preferred polymers can be selected from the group of ethylene/vinyl acetate copolymers (EVA), ethylene (meth)acrylic acid copolymers, polyethylene resins, polypropylene resins, ethylene methyl acrylate resins, or acid-modified or acid/acrylate-modified ethylene vinyl acetate resins. The latter class of materials includes EVA resins blended with polymers having a sufficient amount of acid or acid/acrylate functionality to provide an adequate amount of image receptivity as previously defined for the desired application. A particularly preferred group of such resins is the BYNEL CXA series 3100 acid/acrylate-modified EVA resins, commercially available from E.I. Du Pont de Nemours and Co. ("Du Pont"). The added chemical functionality of these BYNEL resins contributes to their excellent printability and ink adhesion characteristics.

Preferably, the image receptor layer includes at least one of the resins mentioned above and at least one pigment. Although the image receptor layer could be clear (i.e., having a percent light transmission less than about 5%), preferably, the image receptor layer has a percent light transmission of about 5% to about 85%.

In one embodiment, the quantity of modified EVA resin in the image reception layer is preferably maximized within the limits of performance requirements of the image receptor medium. Routine efforts could be needed to optimize this quantity, although a typical formulation for most embodiments of the invention includes at least 60 %, and preferably about 70 % by weight of the modified EVA resin. The optimum quantity will depend upon the desired application and the targeted cost for the image receptor medium. The performance of the modified EVA resin may be affected by other additives in the image reception layer.

The modified EVA resin in the image reception layer provides image receptivity to a wide variety of imaging materials used in electrography, screen printing, thermal mass transfer or other printing processes. The modified EVA resin is preferably capable of being coextruded into a substantially two-dimensional sheet with at least one other adjacent layer, as described herein.

Preferably, the image receptor layer 12 is coextruded with a pigment-containing layer 14, thus, the image receptor layer 12 is relatively thin and preferably has a thickness in the range from 2.5 to 127 µm (0.1 to 5 mils). However, it is also within the scope of the present invention to provide a thicker image receptor layer 12 (i.e., thicker than the above-described range) to provide sufficient durability and dimensional stability for the intended application.

### Additional Layers

Referring to Figure 1, preferably, a pigment-containing layer 14 is included in a multilayer film according to the present invention. Layers other than image receptive then are typically included, for example, to reduce the cost and/or enhance the physical properties of the multilayer film. Such additional layers preferably include a polymer and a pigment. The pigment-containing layer 14 can comprise any polymer having desirable physical properties for the intended application. Properties such as flexibility or stiffness, durability, tear resistance, conformability to non-uniform surfaces, die cuttability, weatherability, heat resistance and elasticity are examples. For example, a graphic marking film used in short term outdoor promotional displays typically can withstand outdoor conditions for a period in the range from about 1 week to more than several years and exhibits tear resistance and durability for easy application and removal.

The material for the pigment-containing layer is preferably coextruded into a substantially two-dimensional layer simultaneously with other layers, as described herein. Preferably, a pigment-containing layer can include a thermoplastic material, such as polyester, polyamide, polyimide, polyurethane, polyethylene acrylic acid, polyvinyl chloride, polyethylene methacrylic acid, thermoplastic rubbers (e.g., nitriles), polypropylene oxides, polystyrenes, polystyrene-polydiene block copolymers, ionic thermoplastic elastomers, polyethers, polyesteramides, polyetheresteramides, siloxanes, ethylene vinyl acetate (including ethylene/vinyl acetate copolymers (EVA) and acid-modified or acid/acrylate-modified ethylene vinyl acetate resins), PMMA, PVDC, acetate copolymers, polybutenes, fluorine-containing elastomers, silicone rubbers, polycaprolactones, and elastomeric block copolymers, and blends of the aforementioned. Preferred thermoplastic materials utilized in the pigment-containing layer include polyvinyl chloride, polyethylene, polyurethane; polyethylene acrylic acid, polypropylene, polyester, polycarbonate, polyimides, polyamides, and blends thereof. Other polymers can include ethylene (meth)acrylic acid copolymers, or ethylene methyl acrylate resins. Preferably, the pigment-containing layer comprises a nonplasticized polymer to avoid difficulties with plasticizer migration and staining in the image receptor layer.

Preferably, the pigment-containing layer includes a thermoplastic material and at least one pigment. Although the pigment-containing layer can be clear (i.e., having a percent light transmission of less than about 5%), preferably, the pigment-containing layer is selected such that the entire film has a percent light transmission of about 5% to about 85%, depending upon the amount of pigment included in the pigment-containing layer.

A typical thickness of the pigment-containing layer 14 is in the range from 12.7 to 254 µm (0.5 mil to 10 mils). However, the thickness can be outside this range providing the resulting multilayer film is not too thick to feed into the printer or image transfer device of choice. A useful thickness is generally determined based on the requirements of the desired application.

### Optional Adhesive Layer

A multilayer film in accordance with the present invention may also include an adhesive layer, the presence of which makes the multilayer film useful as a graphic marking film. Although it is preferable to use a pressure sensitive adhesive, any adhesive that is particularly suited to the pigment-containing layer and to the selected application can be used. Such adhesives are those known in the art and may include aggressively tacky adhesives, pressure sensitive adhesives, repositionable or positionable adhesives, hot melt adhesives, and the like. One preferred type of adhesives includes pressure sensitive adhesives, such as those disclosed in U.S. Patent Nos. 5,141,790 (Calhoun et al.); 5,229,207 (Paquette et al.); 5,296,277 (Wilson et al.); 5,362,516 (Wilson et al.).

Preferably, if present, the adhesive layer can have a caliper ranging from about 12 µm (0.0005 in.) to about 75 µm (0.003 in.), and more typically from about 20 µm (0.0008 in.) to about 40 µm (0.0016 in.).

The adhesive layer 17 is preferably covered with a release liner (not shown) that provides protection to the adhesive until the image receptor medium is ready to be applied to a surface. Any suitable commercially available release liners can be utilized in accordance with the present invention, such as those available from Daubert Coated Products, Inc., Westchester, IL, and Rexam Release, Oakbrook, IL.

### Optional Prime Layer

A multilayer film in accordance with the present invention can also include a prime layer. As illustrated in Figure 2, optional prime layer 16 is located on the surface of pigment-containing layer 14 opposite image reception layer 12. The prime layer may optionally be located on the surface of the image reception layer 12 opposite the outer surface 13 (not shown). The prime layer serves to increase the bond strength between the pigment-containing layer and an adhesive layer 17 if the bond strength is not sufficiently high without the prime layer. Preferably, the prime layer includes a polymer and a pigment.

Prime layer 16 may also by itself serve as an adhesive layer in some applications. The prime layer preferably comprises an ethylene vinyl acetate resin containing from about 5 weight % to about 28 weight % vinyl acetate, and a filler such as talc to provide a degree of surface roughness to the prime layer. The filler helps prevent blocking and promotes adhesion of the adhesive. The filler is generally present in an amount in the range from about 2 % to about 12 % by weight, preferably about 4 % to about 10 % by weight, and more preferably about 8 % by weight.

### Optional Inkjet Layer

Figure 3 illustrates an image receptor medium having the same features as shown in Figure 2, with the addition of an optional inkjet layer 36 on the outer surface 13 of the image reception layer 12. The inkjet layer is preferably used when the image receptor medium will receive images from a thermal ink jet printer using water-based inkjet inks (either dye-based or pigment-based) to provide characteristics of dye bleed resistance, low fading, uniform fading and rapid drying. In one embodiment, the inkjet layer comprises at least two layers 32 and 34. The uppermost layer 32, or top coat layer, functions as a protective penetrant layer to rapidly take up the water-based ink while the bottom coat layer 34 functions as an inkjet receptor. The bottom coat layer contains dispersed particles of a size such that the surface of the top coat layer exhibits protrusions or is roughened. The dispersed particles are preferably cornstarch or a modified cornstarch. Alternatively, an inkjet layer may comprise a single layer (not shown) such as described in U.S. Patent Nos. 5,389,723 and 5,472,789, both to Iqbal et al.

It is within the spirit of this invention to include other layers in addition to the image reception layer 12, the pigment-containing layer 14, the optional prime layer 16, the optional adhesive layer 17, and the optional inkjet layer 36. Additional layers may be useful for adding color, enhancing dimensional stability, promoting adhesion between dissimilar polymers in the above-described layers, and the like. After the image receptor medium has been printed with an image, an optional protective overlaminate layer (not shown) may be adhered to the printed surface. The overlaminate layer improves weather resistance of the film by helping to protect the film from ambient humidity, direct sunlight and other weathering effects, as well as protecting the image from nicks, scratches, and splashes. In addition, the overlaminate layer can impart a desired finish to the image, such as high gloss or matte. Suitable overlaminate layers include any suitable transparent plastic sheet material bearing an adhesive on one surface. Use of such overlaminate layers is, for example, described in U.S. Patent No. 4,966,804 (Hasegawa et al.)

In accordance with the present invention, any of the layers included in a multilayer film construction may include two or more sublayers. For purposes of the present invention, "sublayers" are two or more layers having essentially the same material constitution and chemistry. For example, a typical pigment-containing layer 14 of a thickness from 12.7 to 254 µm (0.5 mil to 10 mils) can be formed from two or more sublayers. Alternatively, the present invention may comprise two or more layers that perform essentially the same function, such as image reception or strengthening, but which utilize different material construction or chemistry. Optionally, the sublayers may be prepared using a split stream extrusion process. In this process, the molten polymer is prepared as one composition and processed to the extruder such that the stream is split to two or more flow channels for extruding to form a multilayer film. The extrusion die may be designed to locate the sublayers adjacent to each other or with one or more layers between the sublayers. The use of such dies in coextrusion processes is known, for example, in the packaging film industry.

In addition to the optional layers mentioned above, a multilayer film in accordance with the present invention can include other optional layers, such as an abrasion and/or graffiti resistant layer, a release liner layer, and the like.

### Pigment(s)

As mentioned above, at least two of the layers in a multilayer film in accordance with the present invention contain a pigment. If the multilayer film contains only two layers, e.g., an image receptor layer and a pigment-containing layer, then each of these layers contains a pigment. If the multilayer film contains an image receptor layer, a pigment-containing layer, and at least one optional layer, then any two of the multiple layers contain a pigment. Preferred pigments can be white, yellow, red, green, blue, gray, and a combination thereof. When white is desired, titanium dioxide can be used. When yellow is a desired color, the colored pigments may include pigment yellow (P.Y.) 83, 109, 110, 120, 173, 183, 191, and the like. When red is the desired color, the color pigments may include pigment red (P.R.) 101 or P.R. 170, for example, RT 170-D, RT 171-P, RT 172-D, and RT 173-P, commercially available under the trade designation NAPHTHANIL reds from Cookson Pigments, NJ. The appearance of reds can be adjusted by adding colored pigments such as pigment orange (P.O.) 36, for example, an azoic pigment, or violet pigments (P.V.) 19, for example, a quinacridone pigment, commercially available from Harwick Chemical Corp. When green is the desired color, the colored pigments may include pigment green (P.G.) 36 or 7, such as that commercially available under the trade designation PALOMAR green G-5420 (a copper phthalocyanine pigment) from Miles, Inc., Pittsburgh, PA; and ENDUROPHTHAL green GT-829-D (a phthalocyanine pigment), from Cookson Pigment. When blue is the desired color, the colored pigments can include pigment blue (P.B.) 15, such as the commercially available under the trade designation PALOMAR blue B-4720 (a chlorinated phthalocyanine pigment) from Miles, Inc., or ENDUDROPHTHAL BLUE (a phthalocyanine blue pigment) from Cookson Pigment. When a shade gray is the desired color, the colored pigments may include carbon black pigment, such as that commercially available under the trade designation NYSYNBLAK 9010, from Copolymer Rubber and Chemical Corp., Baton Rouge, LA.

One with skill in the art will readily appreciate that the amount of pigment included in at least two of the layers of a multilayer film in accordance with the present invention will depend upon a number of parameters, including the selected color, the desired thickness of each of the layers and the multilayer film, desired application of the multilayer film, intensity of the backlit light source and the like. However, the parameters affecting the amount of pigment to be included in at least two of the layers should result in a multilayer film having a percent light transmission that is preferably from about 5% to about 85%.

Determination of the desired pigment loading is dependent on the required film thickness for the intended application. After determining the optimum film thickness various pigment loading levels may be evaluated with the desired back-light source. One skilled in the art will readily appreciate that different pigments will have different interactions with the light source and produce varying degrees of translucency. These levels can be easily determined through conventional tests in which various pigment loaded films are evaluated for their optical transmission properties.

### Optional Additives

Any of the layers above, whether optional or not, may include at least one optional additive. An optional additive can be selected from additional pigments, fillers, ultraviolet (UV) absorbing agents, antiblocking agents, flame retardant agents, antistatic agents, and carrier resins for such additives, all of which are familiar to those skilled in the art. These additives are preferably chosen so as not to interfere with a coextrusion process described herein, image receptivity, structural integrity of the multilayer film, and the like.

An image receptor layer and/or any additional layer can include a free-radical scavenger, for example, present in an amount typically from about 0.05% to about 1.5% and preferably from about 0.2 to about 0.8 weight percent of the total composition of the layer in which it is present. Nonlimiting examples of the scavenger include hindered amine light stabilizer (HALS) compounds, hydroxylamines, sterically hindered phenols, and the like. Preferably, the free-radical scavenger is regenerating such as existing with the HALS compounds.

### Coextrusion

The present invention provides particular benefit in the case of films that are manufactured using a coextrusion process. Extrusion has been tried as a production method for translucent films many times without success, due to the nonuniformity of the transmitted light. This is attributed to slight variations in pigment concentration due to less than perfect pigment dispersion and to flow patterns from dies that are not perfectly streamlined. In addition, minor process variations typically result in minor variations in film thickness and in localized pigment concentration variations, resulting in films having a blotchy and often unappealing appearance when viewed by the unaided eye. Acceptable pigment dispersion is difficult to achieve in an extrusion process because the melt viscosity of the molten polymer is very high, and residence times in extruders are typically short, so pigments are difficult to wet out and disperse, and the extruder has only a short time to accomplish good mixing. Under ideal conditions using well dispersed pigment concentrates, and using an extruder with good mixing capabilities, single layer films can be produced that have good optical uniformity, but not good enough for backlit applications that are typically very sensitive to minor variations in the light transmission properties of the film.

Typically, a preferred method includes melt-processing at least two molten streams of two polymer compositions, simultaneously joining them together, and cooling the streams to form an imagable film.

Advantageously, the backing may be supplied in a sheet-like or film form or it may be simultaneously melt processed with the adhesive composition during manufacturing of an adhesive article. In the latter instance, the backing is not limited to any particular thickness, and can be 1 micrometer or less, if desired.

As used herein, "melt processing" means the pumping and shaping of molten polymer composition into a multilayer film of the present invention. One melt processing technique useful in this invention is coextrusion. As used herein, "coextrusion" means the simultaneous melt processing of multiple molten streams and combination of such molten streams into a single unified extrudate, preferably from a single extrusion die. When a single die is used, the streams of molten material are not required to exit the die from a single outlet. The molten streams can be joined together in a die, or outside the die. If the streams are joined in the die, they can come together upstream of the exit orifice (a common land die) or at the exit orifice (a zero common land die). In all cases, however, the streams are joined or combined together in proximity to the outlet of the die.

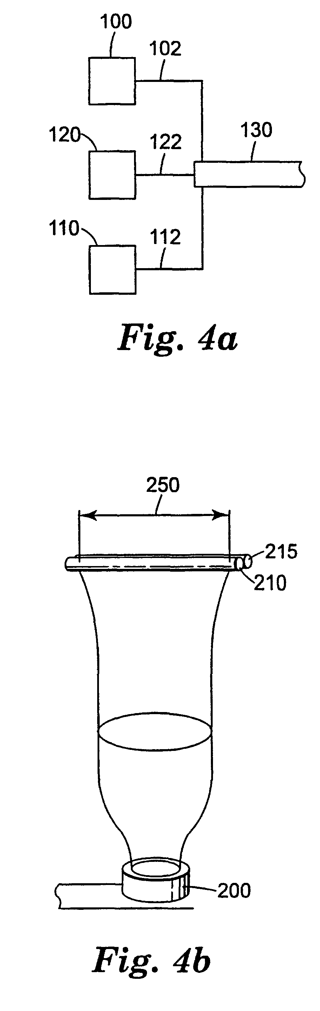

As mentioned above, an adhesive article in accordance with the invention is preferably manufactured using a coextrusion process, wherein several molten streams are transported to an extrusion die outlet and joined together in proximity of the outlet. One preferred coextrusion technique useful in the present invention is schematically shown in Figure 4a. Extruder screws 100 and 120 provide molten streams 102 and 122 of a first and a second polymer composition to a melt blown extruder die 200, shown in Figure 4b. Extruder screw 110 can provide a molten stream of a third material, such as an adhesive prime material 112, to the melt blown extruder die. It is of course understood that if no third material is desired, there is no need to utilize extruder screw 110. It is further understood that only one extruder screw, either 100 or 120, is needed to deliver a melt stream to the melt blown extruder die. In the event that only one extruder screw is employed, the melt stream may be split into the number of streams (e.g., two or more) of pigment-containing compositions to be included in an optically uniform multilayer film of the present invention.

The molten streams flow into a single flow channel 130. The distinct layers of each material are maintained at this time generally because of laminar flow characteristics of the streams. Preferably, the channel delivers or transports the now unified, molten extrudate to an extrusion die, preferably an extrusion die 200 suitable for forming a blown film, as shown in Figure 4b. As is known in the art, a blown film extrusion die utilizes air to solidify the molten extrudate as it exits the extrusion die. See, Progelhof, et al., "Polymer Engineering Principles," Hanser/Gardner Publications, Inc., Cincinnati, OH, pp. 405-431 (1993), for a description of blown film extrusion.

The extruder screws 100, 110, and 120 are in effect "pumps" for delivery of the molten streams to the extrusion die. The precise extruder employed is not critical to the process. However, it is understood that the design of the extruder screw will influence the ability of the extruder to provide good melt quality, temperature uniformity, dispersion of pigments and additives, throughput and the like. A number of useful extruder screws are known and include single and twin screw extruders, batch-off extruders and the like. These extruder screws are available from a variety of vendors including Davis-Standard Extruders, Inc. (Pawcatuck, CT), Black Clawson Co. (Fulton, NY), Berstorff Corp. (NC), Farrel Corp. (CT), Moriyama Mfg. Works, Ltd. (Osaka, Japan).

Other equipment may also be employed to deliver the molten streams to the extrusion die. They include drum unloaders, bulk meters, gear pumps, etc. These are available from a variety of vendors, including Graco LTI (Monterey, CA), Nordson (Westlake, CA), Industrial Machine Manufacturing (Richmond, VA), Zenith Pumps, Div., Parker Hannifin Corp. (NC).

Once the molten streams have exited the pump, they can be transported to the die through transfer tubing and/or hoses. It is preferable to minimize the amount of residence time in the tubing so as to avoid problems, such as melt temperature variations. Limiting the residence time can be accomplished by a variety of techniques, such as limiting the length of tubing, providing appropriate temperature control of the tubing, and utilizing static mixers in the tubing to maintain a homogeneous temperature in the tubing.

The use of a feedblock is optional as a variety of coextrusion die systems are known. Thus, for example, a multi-manifold die may also be employed. Examples of feedblocks and extrusion dies useful in the invention are available from The Cloeren Company (Orange, TX); Extrusion Dies, Inc. (Chippewa Falls, WI); ER-WE-PA (GA); Egan Machinery Division, John Brown Inc. (NJ); and Welex Inc. (PA).

The selection of the feedblock and/or extrusion die to be utilized is not critical to the practice of the process. However, it is noted that certain factors do influence the performance of the extrusion process. For example, because feedblocks require material to flow in contact through a single manifold after the point of confluence, the relative viscosities of the materials and their ability to be processed at a single manifold temperature must be considered. When the relative viscosities of the materials exceed 4:1 or when a single manifold temperature cannot be tolerated by the materials, multi-manifold dies are typically employed. In multi-manifold dies, each material flows into its own manifold to the point of confluence. Each individual manifold can be designed specifically for the rheology of each resin. Also, each manifold can be controlled at a different process temperature.

Multi-manifold dies can also be designed with zero common land length so that the materials do not meet until the die lip or exit orifice that are particularly useful when the molten streams each have extreme viscosity differences (e.g., a ratio of about 400:1 or more). Alternatively, they can be designed with a short common land length that are particularly useful for streams having more moderate viscosity differences because the period of high pressure and high temperature when the molten streams are together in the common land length can improve bond strength between layers formed by the molten streams in an adhesive article.

Additionally, the multilayer film may be "nipped" by passing it through a pair of rolls 210/215 which are typically provided to maintain the air pressure during the melt blown extrusion process that orients the film. Optionally, the multilayer film can be further passed through other nip rolls (not shown) as is known in the art. Preferably, the multilayer film can then be wound as a roll. Although a melt blown multilayer film can be formed from the extrusion die in a desired width, the length and/or width of the multilayer film can be cut using conventional techniques.

A number of additional steps can optionally be performed if desired. For example, the adhesive layer 17 may be coextruded with the other layers, transferred to the image receptor medium from a liner, or directly coated onto the image receptor medium in an additional process step.

### Multilayer Film Applications

A multilayer film in accordance with the present invention is particularly well suited for a variety of applications, such as electronically cut images that can form any letter, shape, or other desired configuration, background films on which other figures may be applied (for such uses as backlit awnings and sign faces), and direct imaging.

The multilayered films of the present invention find particular advantage when used in backlit sign constructions such as light boxes. Light boxes are typically used either as an advertisement display medium or as signage construction using so called "channel boxes" to create individual illuminated letters, characters or designs. These constructions preferably comprise a box with a back face, side walls and a front face, wherein at least the front face comprises a multilayer film of the present invention. The light box is provided with a light source for illuminating at least the front face from inside the box, which preferably comprises one or more light bulbs, neon light sources, light channeled in using fiber optics, reflectance or the like.

Imaging a multilayer film in accordance with the present invention can utilize a variety of imaging materials that contain a carrier that can either be particulate and semicrystalline or amorphous materials including a film-forming or resinous binder, typically a thermoplastic. The imaging materials also contain pigments or dyes to provide contrast or color to the deposited image. Inks and toners are examples of well-known imaging materials. The imaging materials may be deposited by a variety of known techniques such as electrography, screen printing, knife or roll coating, rotogravure coating, flexographic printing, and the like.

An example of an imaging process using the image receptor medium of the present invention comprises first generating a toned image on an image transfer medium in an electrostatic printer using techniques and materials such as those described in U.S. Patent No. 5,262,259 (Chou et al.), and then transferring the image to the image receiving surface of the image receptor medium. The image transfer can be accomplished in many ways known in the art such as passing the sheets together through heated nip rolls in a method known as hot roll lamination, or placing the sheets together on a heated platen in a vacuum drawdown frame. Hot roll lamination is described in U.S. Patent No. 5,114,520 (Wang et al.). The imaged medium is then preferably covered with an overlaminate layer. If the multilayered film includes an adhesive layer and a release liner, the release liner may be removed and the imaged medium affixed to a wall, vehicle side, banner, or other surface using techniques well known in the art.

In another example of an imaging process, the image receptor medium is screen printed directly, thereby receiving the desired image without the extra image transfer step. The techniques and materials for practicing screen printing are described in U.S. Patent No. 4,737,224 (Fitzer et al.). The imaged film is then used as described above.

In another example of an imaging process, the image receptor medium is fed into an inkjet printer, printed directly with the desired image, and then overlaminated and applied as described above.

In another example of an imaging process, the image receptor medium is printed directly with an image via a thermal mass transfer process, using a device such as a GERBER EDGE thermal transfer printer (Gerber Scientific Products, Inc., Manchester, CT, USA). The image film is then used as described above.

### Examples

The invention is further illustrated by the following examples, but the particular materials and amounts thereof recited in these examples, as well as other conditions and details, should not be construed to unduly limit this invention. Unless otherwise indicated, all ratios and percentages are by weight, and all molecular weights are weight average molecular weights.

### Multilayer Coextrusion

The following formulation was run on a blown film coextrusion line to produce a 52" wide film with a caliper of 0.004". Each of the formulations below were dry blended.

### Image Receptor Layer

An image receptor layer was formed from a composition including:
1000 parts of an acid/acrylate-modified EVA copolymer commercially available under the trade designation BYNEL 3101, from E.I. DuPont de Nemours and Co., Wilmington, DE
80 parts titanium dioxide white concentrate, commercially available under the trade designation AMPACET 11976, from Ampacet Corporation, Tarrytown, NJ
50 parts talc concentrate, commercially available under the trade designation POLYFIL MT5000, from Polyfil Corporation, Rockaway, NJ
50 parts hindered amine light stabilizer concentrate, commercially available under the trade designation AMPACET 10407, from Ampacet Corporation.

### Pigment-containing Layer

A pigment-containing layer was formed from a composition including:
1000 parts polypropylene-ethylene copolymer resin, commercially available under the trade designation FINA Z9470, from Fina Oil and Chemical Company, Deer Park, TX
80 parts titanium dioxide white concentrate, commercially available under the trade designation AMPACET 11976, from Ampacet Corporation
80 parts hindered amine light stabilizer concentrate, commercially available under the trade designation AMPACET 10407, from Ampacet Corporation.

### Prime Layer

A prime layer was formed from a composition including:
1000 parts ethylene vinyl acetate resin, commercially available under the trade designation ELVAX 3135B, from E.I. du Pont de Nemours and Co. (DuPont), Wilmington, DE
80 parts titanium dioxide white concentrate, commercially available under the trade designation AMPACET 11976, from Ampacet Corporation
200 parts talc concentrate, commercially available under the trade designation POLYFIL MT5000, from Polyfil Corporation
50 parts hindered amine light stabilizer concentrate, commercially available under the trade designation AMPACET 10407, from Ampacet Corporation.

Visual inspection of the film by several people under the Uniformity Test confirms its acceptability for use in backlit signage applications. The film was translucent when backlit with a very uniform appearance. Films including only a single pigmented layer of the same or similar formulations had increased color variations making them unacceptable for use as backlit translucent films.

### Examples 1-4 and Comparative Examples A and B

A single film formulation was used to produce films of varying thickness. The film formulation consisted of 100 parts Chevron 129.24 medium density polyethylene (Chevron Chemical Company LLC, Houston, Texas) and 2 parts Standridge #11937 White titanium dioxide color concentrate (Standridge Color Corporation, Social Circle, Georgia). These materials were dry blended together and extruded through a 1.9 cm Brabender lab extruder (C.W. Brabender Instruments Inc., South Hackensack, NJ) and cast onto a 50 µm by 15.24 cm polyester carrier liner and solidified by passing through a chilled three roll stack. A screw having multiple mixing pins was used to provide good mixing of these materials.

A one meter sample of each film was removed from the polyester carrier liner and tested for light transmission through the major surface of the film using a Macbeth model #TR927 reflection densitometer (Macbeth, Newburgh, NY). Ten readings of light transmission were randomly taken from each film and the resulting average light transmission and standard deviation from each sample recorded in Table 1.

**Table 1**

| **Example** | **Average film thickness (µm)** | **Average light transmission (%)** | **Standard deviation of light transmission (%)** |
|---|---|---|---|
| Comp. Ex. A | 88 | 57.4 | 2.00 |
| 1 (Comp.) | 43 | 65.8 | 1.20 |
| 2 (Comp.) | 35 | 61.9 | 0.90 |

Examples in Table 2 were produced by heat laminating films produced in Table 1 to produce a final film with approximately the same thickness for all examples, as noted in Table 2. Each Example were laminated by passing through a Pro-Tech model #9540 laminator heated to 93 deg. C at 0.3 meters/minute under a pressure of 0.44 Mpa. Light transmission data was collected on these Examples using the equipment and procedures described above.

**Table 2**

| **Example** | **Film sample used for final sample construction** | **Number of layers** | **Average total film thickness (µm)** | **Average light transmission (%)** | **Standard Deviation of light transmission** (**%**) |
|---|---|---|---|---|---|
| Comp. Ex. B | Comp. Ex. A | 1 | 88 | 57.4 | 2.00 |
| 3 | Example 1 | 2 | 88 | 53.1 | 0.87 |
| 4 | Example 2 | 3 | 105 | 44.0 | 0.49 |

In general, Table 2 illustrates the increase in optical uniformity of a film that is made of multilayers, wherein at least two layers are pigment-containing. In particular, the above data illustrate the increase in optical uniformity that is attained by using more than one film layer to produce a pigmented translucent film. The multilayered film of Example 3 has significantly increased optical uniformity over the single layer of film of Comparative Example B, as indicated by the decrease in standard deviation of the light transmission measurements. Example 3 illustrates that the optical uniformity of a multilayered film is greater than that of each individual layer as indicated by the decrease in standard deviation from the single film to the stacked film construction, as shown in Table 1. This trend continues as the number of layers in the film increases, as illustrated in Example 4 in which the standard deviation is nearly one fourth the standard deviation of Comparative Example B (i.e., a single layer film construction compared to a three-layer film construction). It is believed that the trend will continue for increasing number of layers.

### Examples 5 and 6 and Comparative Example C

The optical uniformity of a multilayer film was evaluated in these examples. In the Examples below, a single formulation was used to produce films of varying thickness. The film formulation consisted of 100 parts Chevron 129.24 medium density polyethylene (Chevron Chemical Company LLC, Houston, Texas) and 2 parts Standridge #11937 White titanium dioxide color concentrate (Standridge Color Corporation, Social Circle, Georgia). These materials were dry blended together and extruded through a 1.9 cm Brabender lab extruder (C.W. Brabender Instruments Inc., South Hackensack, NJ) and cast onto a 50 micron by 15.24 cm polyester carrier liner and solidified by passing through a chilled three roll stack. A screw having multiple mixing pins was used to provide good mixing of these materials.

As above, a one meter sample of each film was removed from the polyester carrier liner and tested for light transmission using a Macbeth model #TR927 reflection densitometer (Macbeth, Newburgh, NY). Ten readings of light transmission were randomly taken from each film and the resulting average light transmission and standard deviation from each sample recorded in Table 3.

**Table 3**

| **Example** | **Average film thickness (microns)** | **Average light transmission (%)** | **Standard deviation of light transmission (%)** |
|---|---|---|---|
| Comp. Ex. C | 88 | 57.4 | 3.09 |
| 5 (Comp.) | 43 | 63.1 | 1.53 |
| 6 (Comp.) | 35 | 62.2 | 0.73 |

Examples in Table 4 were produced by laying samples of film produced in Table 3 on top of each other to produce a final film with approximately the same thickness for all examples. These samples were held in close contact and 10 measurements were taken of the light transmission through the various film constructions. Data collected on light transmission is given below in Table 4.

**Table 4**

| **Example** | **Film sample used for final sample construction** | **Number of film layers** | **Average total film thickness (microns)** | **Average light transmission (%)** | **Standard deviation of light transmission (%)** |
|---|---|---|---|---|---|
| Comp. Ex. D | Comp. Ex. C | 1 | 88 | 57.4 | 3.09 |
| 7 | Example 5 | 2 | 88 | 47.1 | 1.53 |
| 8 | Example 6 | 3 | 105 | 36.2 | 0.73 |

The above data illustrate the increase in optical uniformity that is attained by using more than one film layer to produce a pigmented translucent film. The multilayered film of Example 7 has significantly increased optical uniformity over the single layer of film of Comparative Example D, as indicated by the decrease in standard deviation of the light transmission measurements. Example 7 illustrates that the optical uniformity of a multilayered film is greater than that of each individual layer as indicated by the decrease in standard deviation from the single film to the stacked film construction. This trend continued for Example 8 (including three pigmented layers), where the standard deviation in the light transmission measurements is more than one fourth the standard deviation of the measurements taken in Comparative Example D (including a single pigmented layer). Furthermore, Example 8 exhibited a standard deviation in the light transmission measurements that was about half of the standard deviation observed in Example 7 (including two pigmented layers). It is believed that this trend is anticipated to continue for increasing number of layers.

The above examples illustrate the increase in optical uniformity obtained by using a multilayer film structure rather than a single layer film structure. The testing was done using single layer films to be able to more accurately determine the variation in optical density in each layer. The basic principle shown in the above Examples can also be applied to a coextruded film in which the layers are combined while molten rather than as individual layers as discussed above. Coextrusion of individual layers would also allow much thinner film layers to be produced due to the reinforcing effect of the entire film structure which essentially supports a thin, weak layer that could not be handled by itself on conventional equipment.

### Examples 9-16 and Comparative Examples E and F

In Examples 9-16 and Comparative Examples E and F, a single film formulation was used to produce films of varying thickness and, hence, color.

Examples 9 and 10 and Comparative Example E consisted of 100 parts Chevron 129.24 medium density polyethylene (Chevron Chemical Company LLC, Houston, Texas) and 10 parts Ampacet #LR91075 red color concentrate (Ampacet).

Examples 11 and 12 and Comparative Example F consisted of 100 parts Chevron 129.24 medium density polyethylene (Chevron Chemical Company LLC, Houston, Texas) and 10 parts Ampacet #LR91069 blue color concentrate (Ampacet).

These materials were dry blended together and extruded through a 1.9 cm Brabender lab extruder (C.W. Brabender Instruments Inc., South Hackensack, NJ) and cast onto a 50 µm by 15.24 cm polyester carrier liner and solidified by passing through a chilled three roll stack. A screw having multiple mixing pins was used to provide good mixing of these materials.

A one yard sample of each film was removed from the polyester carrier liner and tested for light transmission using a Macbeth model #TR927 reflection densitometer (Macbeth, Newburgh, NY). Ten readings of light transmission were randomly taken from each film and the resulting average light transmission and standard deviation from each sample recorded in Table 5.

**Table 5**

| **Example** | **Average film thickness (µm)** | **Average light transmission (%)** | **Standard deviation of light transmission (%)** |
|---|---|---|---|
| Comp. Ex. E | 100 | 6.6 | 0.39 |
| 9 (Comp.) | 50 | 24.9 | 0.65 |
| 10 (Comp.) | 37 | 30.6 | 0.59 |
| Comp. Ex. F | 100 | 9.5 | 0.50 |
| 11 (Comp.) | 50 | 22.6 | 0.36 |
| 12 (Comp.) | 37 | 31.2 | 0.60 |

Examples 13-16 were assembled by laying samples of the film produced in Examples 9-12, respectively, on top of each other to produce a final film with approximately the same thickness for all Examples. These samples were held in close contact and 10 measurements were taken of the light transmission through the various film constructions. Data collected on light transmission is given below in Table 6.

**Table 6**

| **Example** | **Film sample used for final sample construction** | **Number of film layers** | **Average total film thickness (µm)** | **Average light transmission (%)** | **Standard deviation of light transmission (%)** |
|---|---|---|---|---|---|
| Comp. Ex. E | N/A | 1 | 100 | 6.6 | 0.39 |
| 13 | Example 9 | 2 | 100 | 7.7 | 0.15 |
| 14 | Example 10 | 3 | 110 | 5.4 | 0.20 |
| Comp. Ex. F | N/A | 1 | 100 | 9.5 | 0.50 |
| 15 | Example 11 | 2 | 100 | 7.9 | 0.13 |
| 16 | Example 12 | 3 | 110 | 7.1 | 0.23 |

The above data illustrate the increase in optical uniformity that is attained by using more than one film layer to produce a pigmented translucent film. The multilayered red film of Example 13 has significantly increased optical uniformity over the single layer of film of Comparative Example E, as indicated by the decrease in standard deviation of the light transmission measurements. Example 13 illustrates that the optical uniformity of a multilayered film is greater than that of each individual layer as indicated by the decrease in standard deviation from the single film to the stacked film construction. This trend did not continue for the three layer stack because of the higher standard deviation of the individual film layer used in Example 13 (0.65) versus the film layer used in Example 14 (0.59). The three layer stack does show significantly improved optical uniformity over the single layer film, illustrating the increased optical uniformity achieved by using more than one pigmented layer to produce the film. The same conclusions can be drawn for the examples of blue film. The multilayered blue film of Example 15 has significantly improved optical uniformity over the single film layer of Comparative Example F. Example 16 has poorer optical uniformity than Comparative Example F, but each layer has poorer optical uniformity than that of Example 15. In all of the above Examples, the use of a multilayered film results in increased optical uniformity when compared to a single layer film of approximately the same thickness and composition.

## Claims

1. A backlit graphic display article comprising a multilayer film comprising at least two layers,
wherein at least two of the layers are pigmented to matching color such that the multilayer film has a percent light transmission of about 5% to about 85% and does not show visible discontinuities when evaluated by the unaided eye under Backlight Conditions.

2. A backlit graphic display article comprising a multilayer film comprising at least two layers,
wherein at least two of the layers are pigmented such that the multilayer film has a percent light transmission of about 5% to about 85% and
wherein the multilayer film has a standard deviation of light transmission less than 75% of the standard deviation of a single layer comparative film as determined by the Comparative Uniformity Test.

3. The backlit graphic display article of claim 1, wherein the multilayer film comprises 2 layers.

4. The backlit graphic display article of claim 1, wherein the multilayer film comprises from 3 layers to about 35 layers.

5. The backlit graphic display article of claim 1, wherein the multilayer film comprises at least one layer selected from the group consisting of an adhesive prime layer, an adhesive layer, an inkjet layer, and a combination thereof.

6. The backlit graphic display article of claim 1, wherein the multilayer film comprises at least one layer selected from the group consisting of an adhesive prime layer, an adhesive layer, a penetrant layer, an inkjet receptor layer, and a protective overlaminate layer.

7. The backlit graphic display article of claim 1, wherein the additional layer and the image receptor layer each comprise a different polymer.

8. The backlit graphic display article of claim 1, wherein the additional layer comprises a pigment and a polymer selected from the group consisting of polyvinyl chloride, polyethylene, polyurethane, polyethylene acrylic acid, polypropylene, polyester, polycarbonate, a polyimide, a polyamide, and blends thereof.

9. The backlit graphic display article of claim 1, wherein the image receptor layer comprises a pigment and a material selected from the group consisting of an ethylene/vinyl acetate copolymer, an ethylene (meth)acrylic acid copolymer, polyethylene, polypropylene, an ethylene methyl acrylate resin, an acid-modified ethylene vinyl acetate resin, an acid/acrylate-modified ethylene vinyl acetate resin, and blends thereof.

10. The backlit graphic display article of claim 2, wherein the multilayer film has a standard deviation of light transmission less than 50% of the standard deviation of a single layer comparative film as determined by the Comparative Uniformity Test.

11. The backlit graphic display article of claim 2, wherein the multilayer film has a standard deviation of light transmission less than 35% of the standard deviation of a single layer comparative film as determined by the Comparative Uniformity Test.

12. The backlit graphic display article of claim 2, wherein the multilayer film comprises 2 layers.

13. The backlit graphic display article of claim 2, wherein the multilayer film comprises from 3 layers to about 35 layers.

14. The backlit graphic display article of claim 2, wherein the multilayer film comprises at least one layer selected from the group consisting of an adhesive prime layer, an adhesive layer, an inkjet layer, and a combination thereof.

15. The backlit graphic display article of claim 2, wherein the multilayer film comprises at least one layer selected from the group consisting of an adhesive prime layer, an adhesive layer, a penetrant layer, an inkjet receptor layer, and a protective overlaminate layer.

16. The backlit graphic display article of claim 2, wherein the additional layer and the image receptor layer each comprise a different polymer.

17. The backlit graphic display article of claim 2, wherein the additional layer comprises a pigment and a polymer selected from the group consisting of polyvinyl chloride, polyethylene, polyurethane, polyethylene acrylic acid, polypropylene, polyester, polycarbonate, a polyimide, a polyamide, and blends thereof.

18. The backlit graphic display article of claim 2, wherein the image receptor layer comprises a pigment and a material selected from the group consisting of an ethylene/vinyl acetate copolymer, an ethylene (meth)acrylic acid copolymer, polyethylene, polypropylene, an ethylene methyl acrylate resin, an acid-modified ethylene vinyl acetate resin, an acid/acrylate-modified ethylene vinyl acetate resin, and blends thereof.

19. A method of making a backlit graphic display article comprising:
providing a first pigmented layer;
providing a second pigmented layer; and
joining the first pigmented layer and the second pigmented layer, wherein the multilayer film has a percent light transmission of about 5% to about 85% and does not show visible discontinuities when evaluated by the unaided eye under Backlight Conditions.

20. The method of claim 19, wherein joining the first pigmented layer and the second pigmented layer comprises laminating the first pigmented layer and the second pigmented layer.

21. The method of claim 19, wherein providing the first pigmented layer comprises providing a first molten stream comprising a polymer and a pigment and joining the first pigmented layer by extruding the first molten stream on the second pigmented layer.

22. The method of claim 19, wherein providing the second pigmented layer comprises providing a second molten stream comprising a polymer and a pigment and joining the first pigmented layer and the second pigmented layer by coextruding the first molten stream with the second molten stream.

23. A graphic display article of claim 1, which is a light box comprising a back face, side walls and a front face comprising the multilayer film, with a light source provided to illuminate at least the front face from inside the box, wherein the light source comprises light bulbs located inside the box.

## Patentansprüche

1. Gegenstand zur graphischen Anzeige mit Hintergrundbeleuchtung, umfassend eine Mehrschichtfolie mit mindestens zwei Schichten, wobei mindestens zwei der Schichten so pigmentiert sind, daß sie eine zueinander passende Farbe aufweisen, so daß die Mehrschichtfolie eine prozentuale Lichtdurchlässigkeit von etwa 5% bis etwa 85% aufweist und keine sichtbaren Diskontinuitäten zeigt, wenn sie mit dem bloßen Auge unter Hintergrundbeleuchtungs-Bedingungen betrachtet wird.

2. Gegenstand zur graphischen Anzeige mit Hintergrundbeleuchtung, umfassend eine Mehrschichtfolie mit mindestens zwei Schichten, wobei mindestens zwei der Schichten so pigmentiert sind, daß die Mehrschichtfolie eine prozentuale Lichtdurchlässigkeit von etwa 5% bis etwa 85% aufweist und wobei die Mehrschichtfolie eine Standard-Abweichung der Lichtdurchlässigkeit von weniger als 75% der Standard-Abweichung einer Vergleichs-Einschichtfolie, bestimmt anhand des Gleichförmigkeits-Vergleichstests, aufweist.

3. Gegenstand zur graphischen Anzeige mit Hintergrundbeleuchtung nach Anspruch 1, wobei die Mehrschichtfolie zwei Schichten umfaßt.

4. Gegenstand zur graphischen Anzeige mit Hintergrundbeleuchtung nach Anspruch 1, wobei die Mehrschichtfolie drei Schichten bis etwa 35 Schichten umfaßt.

5. Gegenstand zur graphischen Anzeige mit Hintergrundbeleuchtung nach Anspruch 1, wobei die Mehrschichtfolie mindestens eine Schicht, ausgewählt aus einer Klebstoffgrundierungsschicht, einer Klebstoffschicht, einer Tintenstrahlschicht und einer Kombination davon, umfaßt.

6. Gegenstand zur graphischen Anzeige mit Hintergrundbeleuchtung nach Anspruch 1, wobei die Mehrschichtfolie mindestens eine Schicht, ausgewählt aus einer Klebstoffgrundierungsschicht, einer Klebstoffschicht, einer Penetriermittel-Schicht, einer Tintenstrahl-Aufnahmeschicht und einer darüberlaminierten Schutzschicht, umfaßt.

7. Gegenstand zur graphischen Anzeige mit Hintergrundbeleuchtung nach Anspruch 1, wobei die zusätzliche Schicht und die Bildaufnahmeschicht jeweils ein unterschiedliches Polymer umfassen.

8. Gegenstand zur graphischen Anzeige mit Hintergrundbeleuchtung nach Anspruch 1, wobei die zusätzliche Schicht ein Pigment und ein Polymer, ausgewählt aus Polyvinylchlorid, Polyethylen, Polyurethan, Polyethylenacrylsäure, Polypropylen, Polyester, Polycarbonat, einem Polyimid, einem Polyamid und Gemischen davon, umfaßt.

9. Gegenstand zur graphischen Anzeige mit Hintergrundbeleuchtung nach Anspruch 1, wobei die Bildaufnahmeschicht ein Pigment und ein Material, ausgewählt aus einem Ethylen/Vinylacetat-Copolymer, einem Ethylen-(Meth)acrylsäure-Copolymer, Polyethylen, Polypropylen, einem Ethylenmethylacrylatharz, einem Säuremodifizierten Ethylenvinylacetatharz, einem Säure/Acrylat-modifizierten Ethylenvinylacetatharz und Gemischen davon, umfaßt.

10. Gegenstand zur graphischen Anzeige mit Hintergrundbeleuchtung nach Anspruch 2, wobei die Mehrschichtfolie eine Standard-Abweichung der Lichtdurchlässigkeit von weniger als 50% der Standard-Abweichung einer Vergleichs-Einschichtfolie, bestimmt anhand des Gleichförmigkeits-Vergleichstests, aufweist.

11. Gegenstand zur graphischen Anzeige mit Hintergrundbeleuchtung nach Anspruch 2, wobei die Mehrschichtfolie eine Standard-Abweichung der Lichtdurchlässigkeit von weniger als 35% der Standard-Abweichung einer Vergleichs-Einschichtfolie, bestimmt anhand des Gleichförmigkeits-Vergleichstests, aufweist.

12. Gegenstand zur graphischen Anzeige mit Hintergrundbeleuchtung nach Anspruch 2, wobei die Mehrschichtfolie zwei Schichten umfaßt.

13. Gegenstand zur graphischen Anzeige mit Hintergrundbeleuchtung nach Anspruch 2, wobei die Mehrschichtfolie drei Schichten bis etwa 35 Schichten umfaßt.

14. Gegenstand zur graphischen Anzeige mit Hintergrundbeleuchtung nach Anspruch 2, wobei die Mehrschichtfolie mindestens eine Schicht, ausgewählt aus einer Klebstoffgrundierungsschicht, einer Klebstoffschicht, einer Tintenstrahlschicht und einer Kombination davon, umfaßt.

15. Gegenstand zur graphischen Anzeige mit Hintergrundbeleuchtung nach Anspruch 2, wobei die Mehrschichtfolie mindestens eine Schicht, ausgewählt aus einer Klebstoffgrundierungsschicht, einer Klebstoffschicht, einer Penetriermittel-Schicht, einer Tintenstrahl-Aufnahmeschicht und einer darüberlaminierten Schutzschicht, umfaßt.

16. Gegenstand zur graphischen Anzeige mit Hintergrundbeleuchtung nach Anspruch 2, wobei die zusätzliche Schicht und die Bildaufnahmeschicht jeweils ein unterschiedliches Polymer umfassen.

17. Gegenstand zur graphischen Anzeige mit Hintergrundbeleuchtung nach Anspruch 2, wobei die zusätzliche Schicht ein Pigment und ein Polymer, ausgewählt aus Polyvinylchlorid, Polyethylen, Polyurethan, Polyethylenacrylsäure, Polypropylen, Polyester, Polycarbonat, einem Polyimid, einem Polyamid und Gemischen davon, umfaßt.

18. Gegenstand zur graphischen Anzeige mit Hintergrundbeleuchtung nach Anspruch 2, wobei die Bildaufnahmeschicht ein Pigment und ein Material, ausgewählt aus einem Ethylen/Vinylacetat-Copolymer, einem Ethylen-(Meth)acrylsäure-Copolymer, Polyethylen, Polypropylen, einem Ethylenmethylacrylatharz, einem Säuremodifizierten Ethylenvinylacetatharz, einem Säure/Acrylat-modifizierten Ethylenvinylacetatharz und Gemischen davon, umfaßt.

19. Verfahren zur Herstellung eines Gegenstands zur graphischen Anzeige mit Hintergrundbeleuchtung, umfassend:
Bereitstellen einer ersten pigmentierten Schicht;
Bereitstellen einer zweiten pigmentierten Schicht; und
Verbinden der ersten pigmentierten Schicht und der zweiten pigmentierten Schicht, wobei die Mehrschichtfolie eine prozentuale Lichtdurchlässigkeit von etwa 5% bis etwa 85% aufweist und keine sichtbaren Diskontinuitäten zeigt, wenn sie mit dem bloßen Auge unter Hintergrundbeleuchtungs-Bedingungen betrachtet wird.

20. Verfahren nach Anspruch 19, wobei das Verbinden der ersten pigmentierten Schicht und der zweiten pigmentierten Schicht das Laminieren der ersten pigmentierten Schicht und der zweiten pigmentierten Schicht umfaßt.

21. Verfahren nach Anspruch 19, wobei das Bereitstellen der ersten pigmentierten Schicht das Bereitstellen eines ersten schmelzflüssigen Stroms, umfassend ein Polymer und ein Pigment, und das Verbinden der ersten pigmentierten Schicht durch Extrusion des ersten schmelzflüssigen Stroms auf der zweiten pigmentierten Schicht umfaßt.

22. Verfahren nach Anspruch 19, wobei das Bereitstellen der zweiten pigmentierten Schicht das Bereitstellen eines zweiten schmelzflüssigen Stroms, umfassend ein Polymer und ein Pigment, und das Verbinden der ersten pigmentierten Schicht und der zweiten pigmentierten Schicht durch Coextrusion des ersten schmelzflüssigen Stroms mit dem zweiten schmelzflüssigen Strom umfaßt.

23. Gegenstand zur graphischen Anzeige nach Anspruch 1, bei welchem es sich um ein Leuchtgehäuse handelt, das eine Rückseite, Seitenwände und eine Vorderseite, welche die Mehrschichtfolie umfaßt, mit einer Lichtquelle, die bereitgestellt wird, um zumindest die Vorderseite vom Inneren des Gehäuses aus zu beleuchten, umfaßt, wobei die Lichtquelle im Inneren des Gehäuses befindliche Glühbirnen umfaßt.

## Revendications

1. Élément d'affichage graphique rétro-éclairé comprenant un film multicouche comprenant au moins deux couches,
dans lequel au moins deux des couches sont pigmentées à une couleur de correspondance de façon que le film multicouche ait un pourcentage de transmission de lumière d'environ 5% à environ 85% et ne présente pas de discontinuités visibles lorsqu'il est évalué à l'oeil nu dans des conditions de rétro-éclairage.

2. Élément d'affichage graphique rétro-éclairé comprenant un film multicouche comprenant au moins deux couches,
dans lequel au moins deux des couches sont pigmentées de façon que le film multicouche ait un pourcentage de transmission de lumière d'environ 5% à environ 85% et
dans lequel le film multicouche présente un écart-type de transmission de lumière inférieur à 75% de l'écart-type d'un film comparatif simple couche, tel que déterminé par le test comparatif d'uniformité.

3. Élément d'affichage graphique rétro-éclairé selon la revendication 1, dans lequel le film multicouche comprend 2 couches.

4. Élément d'affichage graphique rétro-éclairé selon la revendication 1, dans lequel le film multicouche comprend de 3 couches à environ 35 couches.

5. Élément d'affichage graphique rétro-éclairé selon la revendication 1, dans lequel le film multicouche comprend au moins une couche choisie dans le groupé constitué d'une couche d'amorçage d'adhésif, une couche adhésive, une couche à jet d'encre, et une combinaison de celles-ci.

6. Élément d'affichage graphique rétro-éclairé selon la revendication 1, dans lequel le film multicouche comprend au moins une couche choisie dans le groupe constitué d'une couche d'amorçage d'adhésif, une couche adhésive, une couche pénétrante, une couche réceptrice à jet d'encre, et une couche protectrice superposée.

7. Élément d'affichage graphique rétro-éclairé selon la revendication 1, dans lequel la couche supplémentaire et la couche réceptrice d'image comprennent chacune un polymère différent.

8. Élément d'affichage graphique rétro-éclairé selon la revendication 1, dans lequel la couche supplémentaire comprend un pigment et un polymère choisi dans le groupe constitué du chlorure de polyvinyle, polyéthylène, polyuréthane, acide acrylique de polyéthylène, polypropylène, polyester, polycarbonate, un polyimide, un polyamide et des mélanges de ceux-ci.

9. Élément d'affichage graphique rétro-éclairé selon la revendication 1, dans lequel la couche réceptrice d'image comprend un pigment et un matériau choisi dans le groupe constitué d'un copolymère d'éthylène/acétate de vinyle, un copolymère d'éthylène-acide (méth)acrylique, polyéthylène, polypropylène, une résine d'acrylate de méthyle d'éthylène, une résine d'acétate vinylique d'éthylène modifiée par un acide, une résine d'acétate vinylique d'éthylène modifiée par un acide/acrylate, et des mélanges de ceux-ci.

10. Élément d'affichage graphique rétro-éclairé selon la revendication 2, dans lequel le film multicouche présente un écart-type de transmission de lumière inférieur à 50% de l'écart-type d'un film comparatif simple couche, tel que déterminé par le test comparatif d'uniformité.

11. Élément d'affichage graphique rétro-éclairé selon la revendication 2, dans lequel le film multicouche présente un écart-type de transmission de lumière inférieur à 35% de l'écart-type d'un film comparatif simple couche, tel que déterminé par le test comparatif d'uniformité.

12. Élément d'affichage graphique rétro-éclairé selon la revendication 2, dans lequel le film multicouche comprend 2 couches.

13. Élément d'affichage graphique rétro-éclairé selon la revendication 2, dans lequel le film multicouche comprend de 3 couches à environ 35 couches.

14. Élément d'affichage graphique rétro-éclairé selon la revendication 2, dans lequel le film multicouche comprend au moins une couche choisie dans le groupe constitué d'une couche d'amorçage d'adhésif, une couche adhésive,.une couche à jet d'encre, et une combinaison de celles-ci.

15. Élément d'affichage graphique rétro-éclairé selon la revendication 2, dans lequel le film multicouche comprend au moins une couche choisie dans le groupe constitué d'une couche d'amorçage d'adhésif, une couche adhésive, une couche pénétrante, une couche réceptrice à jet d'encre, et une couche protectrice superposée.

16. Élément d'affichage graphique rétro-éclairé selon la revendication 2, dans lequel la couche supplémentaire et la couche réceptrice d'image comprennent chacune un polymère différent.

17. Élément d'affichage graphique rétro-éclairé selon la revendication 2, dans lequel la couche supplémentaire comprend un pigment et un polymère choisi dans le groupe constitué du chlorure de polyvinyle, polyéthylène, polyuréthane, acide acrylique de polyéthylène, polypropylène, polyester, polycarbonate, un polyimide, un polyamide et des mélanges de ceux-ci.

18. Élément d'affichage graphique rétro-éclairé selon la revendication 2, dans lequel la couche réceptrice d'image comprend un pigment et un matériau choisi dans le groupe constitué d'un copolymère d'éthylène/acétate de vinyle, un copolymère d'éthylène-acide (méth)acrylique, polyéthylène, polypropylène, une résine d'acrylate de méthyle d'éthylène, une résine d'acétate vinylique d'éthylène modifiée par un acide, une résine d'acétate vinylique d'éthylène modifiée par un acide/acrylate, et des mélanges de ceux-ci.

19. Procédé de réalisation d'un élément d'affichage graphique rétro-éclairé comprenant :
la fourniture d'une première couche pigmentée ;
la fourniture d'une seconde couche pigmentée ; et
la réunion de la première couche pigmentée et de la seconde couche pigmentée, dans lequel le film multicouche a un pourcentage de transmission de lumière d'environ 5% à environ 85% et ne présente pas de discontinuités visibles lorsqu'il est évalué à l'oeil nu dans des conditions de rétro-éclairage.

20. Procédé selon la revendication 19, dans lequel la réunion de la première couche pigmentée et de la seconde couche pigmentée comprend la stratification de la première couche pigmentée et de la seconde couche pigmentée.

21. Procédé selon la revendication 19, dans lequel la fourniture de la première couche pigmentée comprend la fourniture d'un premier courant fondu comprenant un polymère et un pigment et la réunion de la première couche pigmentée par extrusion du premier courant fondu sur la seconde couche pigmentée.

22. Procédé selon la revendication 19, dans lequel la fourniture de la seconde couche pigmentée comprend la fourniture d'un second courant fondu comprenant un polymère et un pigment et la réunion de la première couche pigmentée et de la seconde couche pigmentée par co-extrusion du premier courant fondu avec le second courant fondu.

23. Élément d'affichage graphique selon la revendication 1, qui est une boîte lumineuse, comprenant une face arrière, des parois latérales et une face avant comprenant le film multicouche, une source de lumière étant prévue pour illuminer au moins la face avant de l'intérieur de la boîte, dans lequel la source de lumière comprend des ampoules éclairantes situées à l'intérieur de la boite.
